# FASCICULE DE BREVET EUROPEEN

(11) **EP 2 631 485 B1**
(45) Date de publication et mention de la délivrance du brevet: **02.04.2014**
(21) Numéro de dépôt: 13155277.0
(22) Date de dépôt: 14.02.2013
(51) Int. Cl.: F04C 29/02, F04C 29/04, F25B 31/00, F04B 39/02, F04B 39/06, F16N 39/04, F01M 11/00, F01M 5/00

(54) **DISPOSITIF DE CHAUFFAGE D'UN CARTER D'HUILE**
HEIZEINRICHTUNG FÜR DIE ÖLWANNE EINES KOMPRESSORS
COMPRESSOR OIL SUMP HEATER

(30) Priorité: 21.02.2012 FR 1251544
(43) Date de publication de la demande: 28.08.2013
(73) Titulaire: Flexelec, 69720 St Bonnet de Mure (FR)
(72) Inventeur: Ferrand, Pierre, 69720 SAINT LAURENT DE MURE (FR); Lecointe, Nicolas, RICHMOND TW9 1TJ (GB)
(74) Mandataire: Delorme, Nicolas

(56) Documents cités:
- FR-A1- 2 668 210
- US-A- 4 066 869
- US-A- 5 012 652

## Description

La présente invention concerne un dispositif de chauffage d'un carter d'huile d'un compresseur, et un compresseur équipé de ce dispositif de chauffage.

La présente invention concerne plus généralement le domaine des machines thermodynamiques, telles que les pompes à chaleur, les groupes de climatisation, ou les groupes de réfrigération.

Une machine thermodynamique comporte classiquement un compresseur, un condenseur, un évaporateur et un détendeur formant un circuit fermé à l'intérieur duquel circule un fluide frigorigène

Un problème inhérent à de telles machines est que lorsque le compresseur est à l'arrêt, le fluide frigorigène tend à migrer vers l'élément le plus froid du circuit fermé, généralement le compresseur. Ainsi, le fluide frigorigène s'accumule et se condense dans le carter d'huile, pouvant entrainer la rupture du compresseur lors de sa remise en marche.

On connait par le document US 5 012 652 un dispositif de chauffage 1 (représenté à la figure 1) d'un carter d'huile 2 d'un compresseur 4 visant à pallier cet inconvénient. Le préambule de la revendication indépendante 1 est basé sur ledit document.

Le dispositif 1 comporte :
- une ceinture 6 chauffante électrique destinée à entourer la surface extérieure du carter d'huile 2 du compresseur 4 ;
- un capteur 8 mesurant la température du fluide frigorigène circulant entre le compresseur 4 et un condenseur 10 ;
- un capteur 12 mesurant la température du fluide frigorigène circulant entre un détendeur 12 évaporateur 16 ;
- un capteur 18 mesurant la température du milieu chaud dans lequel est disposé le condenseur 10, et auquel sont transférés les calories captés par l'évaporateur 16 dans le milieu froid ; et
- une unité de commande 20 configurée pour alimenter la ceinture 6 en énergie électrique lorsque la température mesurée par le capteur 8 est inférieure à la température mesurée par l'un des capteurs 12 ou 18 , et pour cesser d'alimenter la ceinture 6 en énergie électrique lorsque la température mesurée par le capteur 8 est supérieure à la température mesurée par l'un des capteurs 12 ou 18.

Un tel dispositif 1 est désavantageux en ce qu'il comprend une électronique d'instrumentation complexe et onéreuse. En outre, la disposition de la pluralité de capteurs 8, 12, 18 sur la machine thermodynamique rend l'installation, et en alternance la désinstallation du dispositif de chauffage 1 longue et fastidieuse.

L'invention vise à remédier à ces inconvénients.

L'invention concerne un dispositif de chauffage d'un carter d'huile d'un compresseur comportant :
- des moyens de chauffage électrique destinés à entourer la surface extérieure du carter d'huile du compresseur, et adaptés pour dissiper une énergie électrique sous forme d'énergie thermique ;
- des moyens de connexion agencés pour connecter les moyens de chauffage à une source d'énergie électrique;
- des moyens de fixation conçus pour fixer les moyens de chauffage autour du carter d'huile du compresseur ;
**caractérisé en ce que** les moyens de connexion comprennent un thermostat fixé aux moyens de fixation des moyens de chauffage à distance de ces derniers, destiné à être placé au niveau de la surface extérieure du carter d'huile, et conçu pour se déformer mécaniquement de manière à :
- déconnecter électriquement la source d'énergie électrique et les moyens de chauffage, lorsqu'il mesure une température supérieure à une valeur déterminée ; et
- connecter électriquement la source d'énergie électrique et les moyens de chauffage lorsqu'il mesure une température inférieure à la valeur déterminée.

Le dispositif selon l'invention prend la forme d'une ceinture intégrant les moyens de chauffage, les moyens de fixation et les moyens de connexion, dont le thermostat. Ainsi, l'installation, et en alternance la désinstallation, d'un tel dispositif est simplifiée par rapport au dispositif de l'état de la technique.

En outre, le contrôle de l'alimentation des moyens de chauffage en énergie électrique est réalisé au moyen d'un thermostat contre trois capteurs et une unité de commande pour le dispositif de l'état de la technique. Ainsi, un tel dispositif présente un coût réduit.

Enfin, le thermostat est fixé sur les moyens de fixation à distance des moyens de chauffage, de telle sorte que la température mesurée par le thermostat soit sensiblement égale à la température de la surface extérieure du carter d'huile et non pas à la température des moyens de chauffage. Ainsi, en condition d'utilisation la température mesurée par le thermostat est peu éloignée de la température de la surface extérieure du carter d'huile.

Le dispositif selon l'invention peut comporter une ou plusieurs des caractéristiques suivantes.

De préférence, le thermostat comprend un bilame formé par empilement :
- d'une première lame réalisée en un premier métal présentant un premier coefficient de dilatation thermique ; et
- d'une seconde lame réalisée en un second métal présentant un second coefficient de dilatation thermique, inférieur au premier coefficient de dilatation thermique.

Avantageusement, le thermostat est fixé aux moyens de fixation par un manchon, de préférence thermorétractable.

Lorsque le compresseur est mis en marche, celui-ci peut générer des vibrations. L'utilisation d'un manchon assure, dans ces conditions, une fixation fiable et rapide du thermostat aux moyens de fixation.

Suivant une caractéristique, les moyens de chauffage comprennent une résistance chauffante électrique.

La résistance chauffante électrique peut prendre la forme de tout élément allongé, tel qu'une bande ou un fil.

De tels moyens de chauffage permettent de chauffer le carter d'huile sur tout ou partie de son pourtour.

Suivant une autre caractéristique, les moyens de fixation comprennent :
- une bride mécaniquement raccordée aux moyens de chauffage ; et
- un organe de serrage adapté pour serrer la bride, et par suite les moyens de chauffage, autour du carter d'huile.

De tels moyens de fixation simplifient l'installation, et en alternance la désinstallation, du dispositif. Ainsi, en cas de disfonctionnement du dispositif, son remplacement est facilité.

L'invention concerne également un compresseur pour l'équipement d'une machine thermodynamique, telle qu'une pompe à chaleur, un groupe de climatisation, ou un groupe de réfrigération comportant un carter d'huile et un dispositif de chauffage tel que présenté ci-avant, et dans lequel le thermostat est agencé pour se déformer mécaniquement de manière à :
- déconnecter électriquement la source d'énergie électrique et les moyens de chauffage, lorsque la température mesurée est supérieure à une valeur déterminée ; et
- connecter électriquement la source d'énergie électrique et les moyens de chauffage, lorsque la température mesurée est inférieure à la valeur déterminée.

Par exemple, le thermostat est de préférence agencé de manière à :
- déconnecter électriquement la source d'énergie électrique et moyens de chauffage, lorsque la température d'huile est comprise entre 25° et 40°, et de préférence entre 30° et 35°; et
- connecter électriquement la source d'énergie électrique et les moyens de chauffage, lorsque la température d'huile est inférieure à 25°, et de préférence inférieure à 30°C.

Dans le dispositif selon l'invention, la température est mesurée à l'extérieur du carter d'huile. Préalablement à l'installation du dispositif, il faut établir une relation entre la température de l'huile dans le carter et la température à l'extérieur du carter, en tenant compte notamment de la conductivité thermique du matériau constitutif du carter, pour connecter et déconnecter la source d'énergie électrique alimentant les moyens de chauffage dans une plage de température déterminée de l'huile contenue dans le carter.

Avantageusement, les moyens de chauffage sont conformés pour s'étendre autour du carter d'huile sur un angle compris entre 160° et 350°, et de préférence compris entre 200° et 320°. Un tel agencement constitue un excellent compromis entre :
- la longueur du cordon chauffant, déterminant la puissance électrique consommée par le dispositif pour permettre la régulation en température de la surface extérieure du carter d'huile ; et
- la longueur de la bride, déterminant la distance entre le thermostat et les moyens de chauffage, et par suite l'influence des moyens de chauffage sur la mesure de température du thermostat.

L'invention sera mieux comprise à l'aide de la description qui suit en référence au dessin schématique annexé représentant, à titre d'exemple, un dispositif de chauffage selon l'invention.

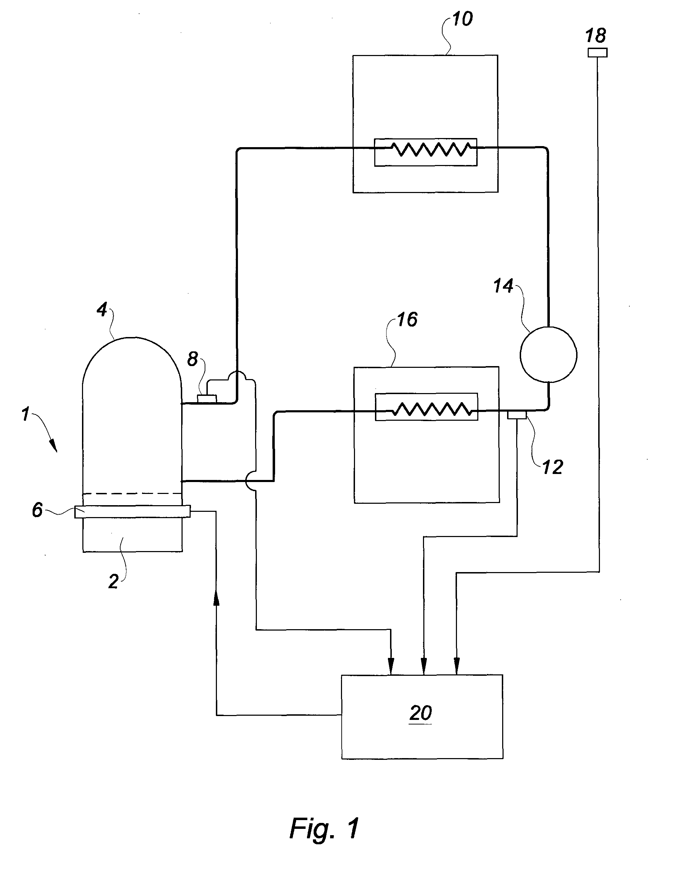

Figure 1 est une vue schématique d'un dispositif de chauffage connu de l'état de la technique ;
Figure 2 en est une vue en perspective d'un dispositif de chauffage selon l'invention monté sur le carter d'huile d'un compresseur ;
Figure 3 est une vue en perspective à échelle agrandie du dispositif de chauffage de figure 2 ;
Figure 4 est une vue en perspective du dispositif de chauffage de figure 2 ;
Figure 5 est une vue en coupe du dispositif de chauffage de figure 2 selon le plan A de figure 4 ; et
Figure 6 est une représentation schématique des moyens de connexion du dispositif de chauffage de figure 2

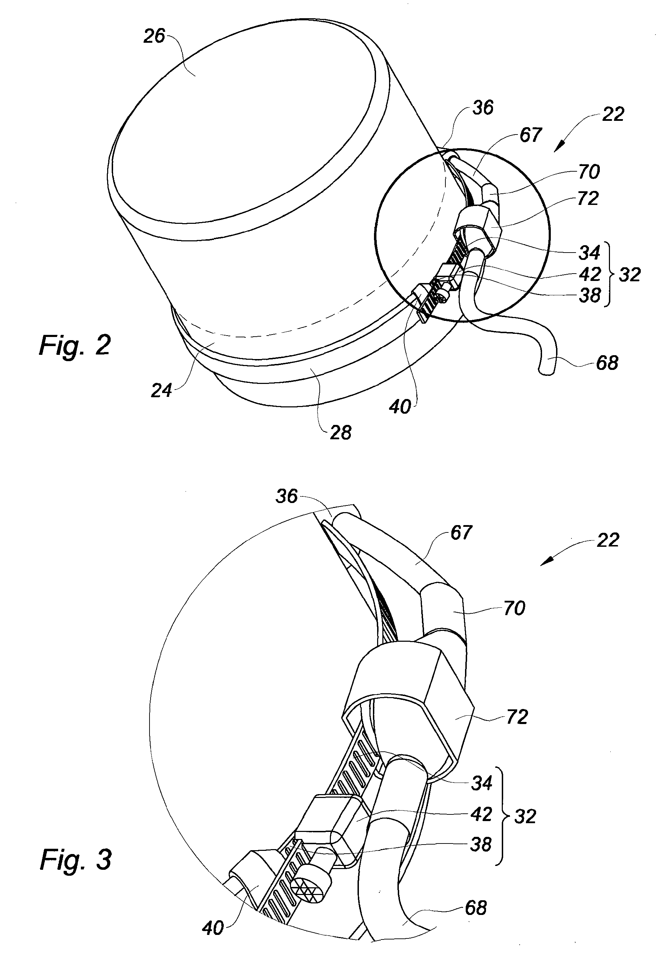

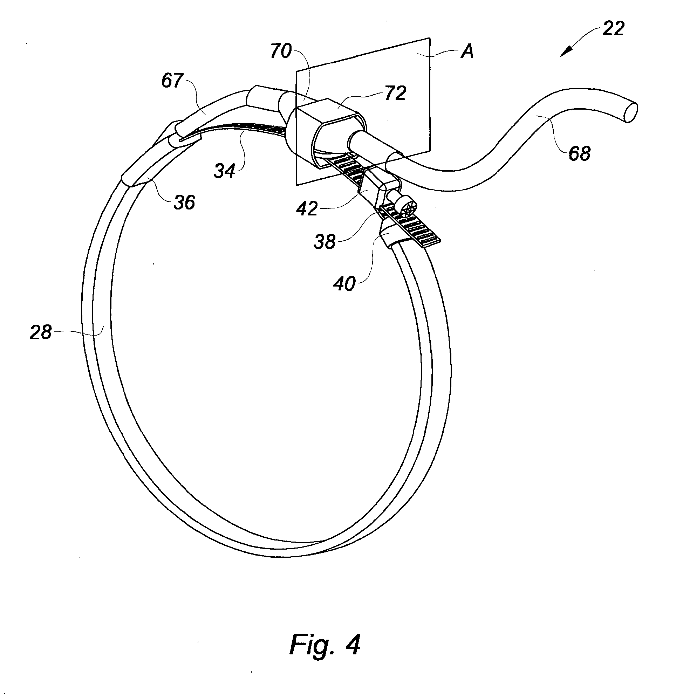

Les figures 2 à 5 représentent un dispositif de chauffage 22 d'un carter d'huile 24 d'un compresseur 26.

Le dispositif 22 comporte des moyens de chauffage 28 électrique entourant le carter d'huile 24. Les moyens de chauffage 28 sont conçus pour dissiper une énergie électrique sous forme d'énergie thermique.

Les moyens de chauffage 28 encore appelés cordon chauffant, sont constitués d'une résistance chauffante isolée électriquement par une enveloppe. A titre d'exemple, la résistance chauffante prend la forme d'un fil. Toujours à titre d'exemple, l'enveloppe est réalisée en silicone.

Les moyens de chauffage 28 s'étendent autour du carter d'huile 24 sur un angle compris entre 200° et 320°.

Le dispositif 22 comporte des moyens de fixation 32 des moyens de chauffage 28 autour du carter d'huile.

Les moyens de fixation 32 comprennent :
- une première portion de bride 34 solidarisée aux moyens de chauffage 28 par un manchon 36 thermorétractable ;
- une seconde portion de bride 38 solidarisée aux moyens de chauffage 28 par un manchon 40 thermorétractable ; et
- un organe de serrage 42 serrant les première et seconde portions de bride 34 et 38, et par suite les moyens de chauffage 28, autour du carter d'huile 24.

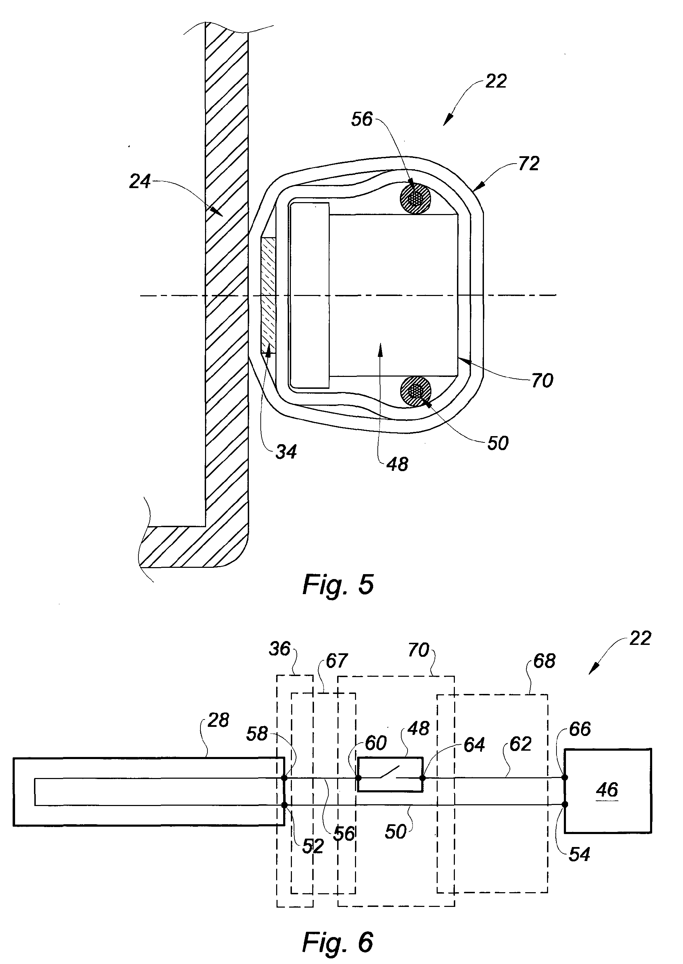

Le dispositif 22 comporte des moyens de connexion 44 électriques (représentés schématiquement à la figure 6) agencés pour connecter, et en alternance déconnecter, les moyens de chauffage 28 à une source 46 d'énergie électrique.

Les moyens de connexion 44 comprennent :
- un thermostat 48 thermique disposé au niveau de la surface extérieure du carter d'huile 24 à distance des moyens de chauffage 28 ;
- un fil 50 d'une part raccordé à une borne 52 des moyens de chauffage 28 et d'autre part à une borne 54 de la source 46 ;
- un fil 56 d'une part raccordé à une borne 58 des moyens de chauffage 28 et d'autre part à une borne 60 du thermostat 48 ; et
- un fil 62 d'une part raccordé à une borne 64 du thermostat et d'autre part à une borne 66 de la source 46.

Le thermostat 48 est conçu pour se déformer mécaniquement de manière à :
- connecter électriquement les fils 56 et 62, lorsqu'il mesure une température inférieure à une valeur déterminée ;
- déconnecter électriquement les fils 56 et 62, lorsqu'il mesure une température supérieure à une valeur déterminée ;

La valeur déterminée correspond à la température mesurée par le thermostat 48 lorsque la température d'huile à l'intérieure du carter d'huile 24 est de l'ordre de 32° C.

Dans ces conditions, les moyens de chauffage 28 sont alimentés lorsque la température d'huile dans le carter d'huile est insuffisante, engendrant un risque de migration du fluide frigorigène à l'intérieur de ce carter d'huile 24.

Les moyens de chauffage 28 cessent d'être alimentés par la source 46 lorsque la température d'huile est suffisante pour interdire la migration du fluide frigorigène à l'intérieur du carter d'huile 24. Le thermostat 48 comprend un bilame formé par empilement d'une première lame réalisée en un premier métal présentant un premier coefficient de dilatation thermique et d'une seconde lame réalisée en un second métal présentant un second coefficient de dilatation thermique, inférieur au premier coefficient de dilatation thermique.

Dans la forme d'exécution représentée, les fils 50 et 56 sont protégés par une gaine 67. La gaine 67 est solidarisée au moyen de chauffage par le manchon 36. Les fils 50 et 62 sont protégés par une gaine 68.

Le thermostat 48 est solidarisé aux gaines 67 et 68 par un manchon 70 thermorétractable. Le manchon 70 isole électriquement le thermostat 48 et les fils 50, 56 et 62. En outre, le manchon 70 forme une protection étanche autour du thermostat 48 et des fils 50, 56 et 62.

Le thermostat 48, les gaines 67 et 68, et le manchon 70 sont solidarisés à la première portion de bride 34 par un manchon 72 rétractable, par exemple thermorétractable ou rétractable élastiquement.

Comme il va de soi, l'invention ne se limite pas aux seules formes d'exécution du couvercle et du procédé de fabrication décrites ci-dessus à titre d'exemple, elle en embrasse au contraire toutes les variantes de réalisation.

## Revendications

1. Dispositif de chauffage (22) d'un carter d'huile (24) d'un compresseur (26) comportant :
- des moyens de chauffage (28) électrique destinés à entourer la surface extérieure du carter d'huile (24) du compresseur (26), et adaptés pour dissiper une énergie électrique sous forme d'énergie thermique ;
- des moyens de connexion (48, 50, 56, 62) agencés pour connecter les moyens de chauffage (28) à une source d'énergie électrique (46) ;
- des moyens de fixation (32) conçus pour fixer les moyens de chauffage (28) autour du carter d'huile (24) du compresseur (26) ;
**caractérisé en ce que** les moyens de connexion (48, 50, 56, 62) comprennent un thermostat (48) fixé aux moyens de fixation (32) des moyens de chauffage (28) à distance de ces derniers, destiné à être placé au niveau de la surface extérieure du carter d'huile (24), et conçu pour se déformer mécaniquement de manière à :
• déconnecter électriquement la source d'énergie électrique (46) et les moyens de chauffage (28), lorsqu'il mesure une température supérieure à une valeur déterminée ; et
• connecter électriquement la source d'énergie électrique (46) et les moyens de chauffage (28) lorsqu'il mesure une température inférieure à la valeur déterminée.

2. Dispositif de chauffage (22) selon la revendication 1, **caractérisé en ce que** le thermostat (48) comprend un bilame formé par empilement :
- d'une première lame réalisée en un premier métal présentant un premier coefficient de dilatation thermique ; et
- d'une seconde lame réalisée en un second métal présentant un second coefficient de dilatation thermique, inférieur au premier coefficient de dilatation thermique.

3. Dispositif de chauffage (22) selon l'une quelconque des revendications 1 à 2, **caractérisé en ce que** le thermostat (48) est fixé aux moyens de fixation (32) par un manchon (72), de préférence thermorétractable.

4. Dispositif de chauffage (22) selon l'une quelconque des revendications 1 à 3, **caractérisé en ce que** les moyens de chauffage (28) comprennent une résistance chauffante électrique.

5. Dispositif de chauffage (22) selon l'une quelconque des revendications 1 à 4, **caractérisé en ce que** les moyens de fixation (32) comprennent :
- une bride (34, 38) mécaniquement raccordée aux moyens de chauffage (28); et
- un organe de serrage (40) adapté pour serrer la bride (34, 38), et par suite les moyens de chauffage (28), autour du carter d'huile (24).

6. Compresseur (26) pour l'équipement d'une machine thermodynamique, telle qu'une pompe à chaleur, un groupe de climatisation, ou un groupe de réfrigération comportant un carter d'huile (24) et un dispositif de chauffage (22) selon l'une quelconque des revendications précédente , et dans lequel le thermostat (48) est agencé pour se déformer mécaniquement de manière à :
• déconnecter électriquement la source d'énergie électrique (46) et les moyens de chauffage (28), lorsque la température d'huile à l'intérieur du carter d'huile (24) est supérieure à une valeur déterminée ; et
• connecter électriquement la source d'énergie électrique et les moyens de chauffage (28), lorsque la température d'huile à l'intérieur du carter d'huile (24) est inférieure à la valeur déterminée.

7. Compresseur selon la revendication 6, **caractérisé en ce que** le thermostat (48) est agencé de manière à :
• déconnecter électriquement la source d'énergie électrique et moyens de chauffage, lorsque la température d'huile est comprise entre 25° et 40°, et de préférence entre 30° et 35°; et
• connecter électriquement la source d'énergie électrique et les moyens de chauffage, lorsque la température d'huile est inférieure à 25°, et de préférence inférieure à 30°C.

8. Compresseur selon l'une quelconque des revendications 6 à 7, **caractérisé en ce que** le dispositif de chauffage est conforme à la revendication 5, et **en ce que** les moyens de chauffage (28) sont conformés pour s'étendre autour du carter d'huile (24) sur un angle compris entre 180° et 350°, et de préférence compris entre 200° et 320°.

## Patentansprüche

1. Vorrichtung (22) zum Erhitzen einer Ölwanne (24) eines Kompressors (26), umfassend:
- elektrische Heizmittel (28), die dazu gedacht sind, die Außenfläche der Ölwanne (24) des Kompressors (26) zu umgeben, und geeignet sind, um eine elektrische Energie als thermische Energie abzuleiten;
- Anschlussmittel (48, 50, 56, 62), die angeordnet sind, um die Heizmittel (28) an eine elektrische Energiequelle (46) anzuschließen;
- Befestigungsmittel (32), die ausgelegt sind, um die Heizmittel (28) um die Ölwanne (24) des Kompressors (26) herum zu befestigen;
**dadurch gekennzeichnet, dass** die Anschlussmittel (48, 50, 56, 62) einen Thermostat (48) umfassen, der an den Befestigungsmitteln (32) der Heizmittel (28) von diesen entfernt befestigt ist und dazu gedacht ist, an der Außenfläche der Ölwanne (24) angeordnet zu werden, und ausgelegt ist, um sich mechanisch derart zu verformen, dass:
• er die elektrische Energiequelle (46) und die Heizmittel (28) elektrisch abschaltet, wenn er eine Temperatur misst, die höher als ein bestimmter Wert ist; und
• er die elektrische Energiequelle (46) und die Heizmittel (28) elektrisch anschließt, wenn er eine Temperatur misst, die tiefer als der bestimmte Wert ist.

2. Heizvorrichtung (22) nach Anspruch 1, **dadurch gekennzeichnet, dass** der Thermostat (48) einen Bimetallstreifen umfasst, der gebildet wird durch Stapeln von:
- einem ersten Streifen, der aus einem ersten Metall ausgebildet ist, das einen ersten Wärmeausdehnungskoeffizienten aufweist; und
- einen zweiten Streifen, der aus einem zweiten Metall ausgebildet ist, das einen zweiten Wärmeausdehnungskoeffizienten aufweist, der niedriger als der erste Wärmeausdehnungskoeffizient ist.

3. Heizvorrichtung (22) nach einem der Ansprüche 1 bis 2, **dadurch gekennzeichnet, dass** der Thermostat (48) an den Befestigungsmitteln (32) durch eine bevorzugt aufschrumpfbare Muffe (72) befestigt ist.

4. Heizvorrichtung (22) nach einem der Ansprüche 1 bis 3, **dadurch gekennzeichnet, dass** die Heizmittel (28) einen elektrischen Heizwiderstand umfassen.

5. Heizvorrichtung (22) nach einem der Ansprüche 1 bis 4, **dadurch gekennzeichnet, dass** die Befestigungsmittel (32) Folgendes umfassen:
- einen Flansch (34, 38), der mechanisch mit den Heizmitteln (28) verbunden ist; und
- ein Spannorgan (40), das geeignet ist, um den Flansch (34, 38) und anschließend die Heizmittel (28) um die Ölwanne (24) zu spannen.

6. Kompressor (26) zur Ausstattung einer Wärmekraftmaschine, wie etwa einer Wärmepumpe, einer Klimaanlage oder einer Kühlanlage, die eine Ölwanne (24) und eine Heizvorrichtung (22) nach einem der vorhergehenden Ansprüche umfasst, und wobei der Thermostat (48) eingerichtet ist, um sich derart mechanisch zu verformen, dass:
• er die elektrische Energiequelle (46) und die Heizmittel (28) elektrisch abschaltet, wenn die Öltemperatur im Innern der Ölwanne (24) höher als ein bestimmter Wert ist; und
• er die elektrische Energiequelle und die Heizmittel (28) elektrisch anschließt, wenn die Öltemperatur im Innern der Ölwanne (24) tiefer als der bestimmte Wert ist.

7. Kompressor nach Anspruch 6, **dadurch gekennzeichnet, dass** der Thermostat (48) derart eingerichtet ist, dass:
• er die elektrische Energiequelle und die Heizmittel elektrisch abschaltet, wenn die Öltemperatur zwischen 25° und 40° und bevorzugt zwischen 30° und 35° liegt; und
• er die elektrische Energiequelle und die Heizmittel elektrisch anschließt, wenn die Öltemperatur tiefer als 25° und bevorzugt tiefer als 30° C ist.

8. Kompressor nach einem der Ansprüche 6 bis 7, **dadurch gekennzeichnet, dass** die Heizvorrichtung Anspruch 5 entspricht, und dass die Heizmittel (28) ausgestaltet sind, um sich um die Ölwanne (24) herum über einen Winkel zwischen 180° und 350° und bevorzugt zwischen 200° und 320° zu erstrecken.

## Claims

1. A heating device (22) of an oil sump (24) of a compressor (26) comprising:
- electric heating means (28) intended to surround the external surface of the oil sump (24) of the compressor (26), and adapted to dissipate an electric energy in the form of thermal energy;
- connecting means (48, 50, 56, 62) arranged to connect the heating means (28) to a source of electric energy (46);
- fastening means (32) designed to secure the heating means (28) around the oil sump (24) of the compressor (26);
**characterized in that** the connecting means (48, 50, 56, 62) comprise a thermostat (48) secured to the fastening means (32) of the heating means (28) remotely therefrom, intended to be placed at the external surface of the oil sump (24), and designed to be mechanically deformed so as to:
• electrically disconnect the source of electric energy (46) and the heating means (28), when it measures a temperature higher than a determined value; and
• electrically connect the source of electric energy (46) and the heating means (28), when it measures a temperature lower than the determined value.

2. The heating device (22) according to claim 1, **characterized in that** the thermostat (48) comprises a bimetallic strip formed by stacking:
- of a first blade made of a first metal having a first thermal expansion coefficient; and
- of a second blade made of a second metal having a second thermal expansion coefficient, lower than the first thermal expansion coefficient.

3. The heating device (22) according to any one of claims 1 to 2, **characterized in that** the thermostat (48) is secured to the fastening means (32) by a sleeve (72), which is preferably heat-shrinkable.

4. The heating device (22) according to any one of claims 1 to 3, **characterized in that** the heating means (28) comprise an electric heating resistor.

5. The heating device (22) according to any one of claims 1 to 4, **characterized in that** the fastening means (32) comprise:
- a flange (34, 38) mechanically connected to the heating means (28); and
- a clamping member (40) adapted to tighten the flange (34, 38), and consequently the heating means (28), around the oil sump (24).

6. A compressor (26) for the equipment of a thermodynamic machine, such as a heat pump, an air-conditioning unit or a refrigeration unit including an oil sump (24) and a heating device (22) according to any one of the preceding claims, and wherein the thermostat (48) is arranged to be mechanically deformed so as to :
• electrically disconnect the source of electric energy (46) and the heating means (28), when the oil temperature within the oil sump (24) is higher than a determined value, and
• electrically connect the source of electric energy (46) and the heating means (28), when the oil temperature within the oil sump (24) is lower than the determined value.

7. The compressor according to claim 6, **characterized in that** the thermostat (48) is arranged so as to :
• electrically disconnect the source of electric energy and the heating means, when the oil temperature is between 25° and 40°, and preferably between 30° and 35°; and
• electrically connect the source of electric energy and the heating means, when the oil temperature is lower than 25°, and preferably lower than 30°C.

8. The compressor according to any one of claims 6 to 7, **characterized in that** the heating device is compliant with claim 5, and **in that** the heating means (28) are shaped to extend around the oil sump (24) over an angle of between 180° and 350°, and preferably between 200° and 320°.
